# EUROPEAN PATENT APPLICATION

(11) **EP 2 525 544 A1**
(43) Date of publication of application: **21.11.2012**
(21) Application number: 11305588.3
(22) Date of filing: 16.05.2011
(51) Int. Cl.: H04L 29/06, H04L 29/08

(54) **Method and apparatus for transparently modifying a TCP conversation**

(71) Applicant: Alcatel Lucent, 75007 Paris (FR)
(72) Inventor: Van Ackere, Michel, 9100 Sint-Niklaas (BE); Migdisoglu, Murat, 2000 Antwerpen (BE); Janssens, Nico, 9290 Overmere (BE); Devyver, Drik, 2820 Rijmenam (BE)
(74) Representative: D'Halleweyn, Nele Veerle Trees Gertrudis

(57) **Abstract**

A method for transparently modifying a TCP conversation between a server and a client, said method comprising the following steps at an intermediate node: receiving a first TCP PUSH packet pertaining to said conversation from one of said client and said server; extracting information characteristic of layer 4-7 data comprised in said first TCP PUSH packet; determining that intervention is desired by applying predetermined criteria to said information; generating a response packet; and transmitting said response packet to said one of said client and said server; wherein said response is formed in accordance with requirements of a protocol used in said TCP conversation.

## Description

### Field of the Invention

The present invention pertains to communications conducted according to the transport control protocol (TCP).

### Background

Current client/server interaction over TCP/IP has the client and server as strict termination points for the TCP session. This has been designed that way in order to assure a high level of security. However, this architecture unnecessarily limits the protocol's flexibility in certain applications.

### Summary

In certain conditions, particular client/server applications could benefit from the possibility to transparently eavesdrop on or even modify the payload content that is exchanged over a TCP session. None of the presently known network elements provides such functionality.

It is therefore an object of the present invention to provide a method and an apparatus for transparently modifying TCP conversations.

According to an aspect of the present invention, there is provided a method for transparently modifying a TCP conversation between a server and a client, said method comprising the following steps at an intermediate node: receiving a first TCP PUSH packet pertaining to said conversation from one of said client and said server; extracting information characteristic of layer 4-7 data comprised in said first TCP PUSH packet; determining that intervention is desired by applying predetermined criteria to said information; generating a response packet; and transmitting said response packet to said one of said client and said server; wherein said response is formed in accordance with requirements of a protocol used in said TCP conversation.

The method according to the present invention greatly simplifies the manipulation of requests/responses that are exchanged over TCP between a client and a server.

It allows the manipulation agent to remain invisible for both the client and the server, so that introduction of the manipulating agent does not require changes in the operation and/or behavior of either the client or the server.

A service or application may be designed to act on an already established TCP session in accordance with the present invention by learning from the content that it carries, acting on the content that it carries, or even modifying the content that it carries.

In an embodiment of the method according to the present invention, said generating of a response packet further comprises: transmitting a second TCP PUSH packet to the second one of said client and said server; receiving an original response to said second TCP PUSH packet from said second one of said client and said server; and using said original response in generating said response packet.

In a particular embodiment, said generating of a response packet further comprises: modifying said first TCP PUSH packet to generate said second TCP PUSH packet.

In a particular embodiment, said generating of a response packet further comprises: forwarding said first TCP PUSH packet to the second one of said client and said server as said second TCP PUSH packet.

In a particular embodiment, said generating said response packet comprises modifying said original response and using said modified original response as said response packet.

In a particular embodiment, said generating said response packet comprises using said original response as said response packet.

These embodiments allow the generation of intermediately generated response packets with or without interaction with the originally targeted TCP peer.

In an embodiment of the method according to the present invention, said extracting of said information comprises extracting a 5-tuple identifying said conversation.

It is an advantage of this embodiment that individual TCP conversations can be identified in an efficient manner, in order to be able to treat different conversations differently, if this is desired.

In a particular embodiment, said intermediate node comprises a mapping memory, the method further comprising storing said 5-tuple in said mapping memory, and retrieving said 5-tuple from said mapping memory to determine a recipient of said response packet.

In a particular embodiment, said extracting of said information further comprises extracting header and/or payload information pertaining to at least one of an OSI layer-5 protocol, an OSI layer-6 protocol, and an OSI layer-7 protocol transported in said received TCP PUSH packet.

It is an advantage of this embodiment that any information carried inside the TCP frame may be used to determine whether that particular frame should be processed according to the method of the present invention.

In an embodiment of the method according to the present invention, said conversation carries a BitTorrent protocol exchange, wherein said one of said client and said server is a BitTorrent client and said other one of said client and said server is a BitTorrent tracker, wherein said received TCP PUSH packet comprises a request for a list of peers, and wherein said response packet comprises a list identifying at least one peer designated by said intermediate node.

It is an advantage of this embodiment that the principles of the invention can be applied to control peer-to-peer downloading traffic in a service provider's network, by controlling the list of BitTorrent peers that a given client will receive in response to a request transmitted to a BitTorrent tracker.

According to an aspect of the present invention, there is provided a computer program for carrying the method described above.

According to an aspect of the present invention, there is provided an apparatus for transparently modifying a TCP conversation, said apparatus comprising: an interface for exchanging TCP packets with a network; an interception agent, operatively coupled to said interface, for extracting information characteristic of layer 4-7 data comprised in a TCP PUSH packet received from said interface; a logic module configured to apply selection criteria to said information; and a response generator, configured to generate a response to said TCP PUSH packet if said selection criteria are met and to transmit said response via said interface; said response generator being adapted to generate said response in accordance with requirements of a protocol used in said TCP conversation.

In an embodiment, the apparatus of the present invention further comprises mapping memory operatively coupled to said interception agent and said response generator, for storing a mapping between said TCP PUSH packet and data pertaining to said response.

In an embodiment of the apparatus of the present invention, said protocol is a BitTorrent protocol.

According to an embodiment of the present invention, there is provided a network comprising a client, a server, and the apparatus as described above.

The advantages of the computer program and the apparatus according to the present invention are analogous to those of the method described above.

### Brief Description of the Figures

Some embodiments of apparatus and/or methods in accordance with embodiments of the present invention are now described, by way of example only, and with reference to the accompanying drawings, in which:
Figure 1 illustrates an apparatus according to an embodiment of the present invention, as deployed in a network supporting TCP communications;
Figure 2 presents a block diagram of an apparatus according to an embodiment of the present invention; and
Figure 3 presents a flow chart of a method according to an embodiment of the present invention.

Throughout the figures, identical or functionally similar elements have been designated with the same reference signs.

### Description of Embodiments

In the applications targeted by the present invention, the TCP session may run through a trustworthy intermediate agent that is allowed to act on the payload content or even to modify it, without the client and/or the server being aware of the TCP session having been intercepted.

Embodiments of the present invention provide a "hook" to add externally defined operation on the data that is transferred over an already established TCP session. As such, this "hook" allows for a multitude of future services/applications in the higher layers of the OSI stack.

The present invention differs from transparent TCP proxies in that the latter require every packet of a session between a client and a server to pass through the proxy. Hence, the transparent proxy resides between the client and the server during the entire data exchange, and never allows the real end points to "see" each other as the real TCP peer. Another difference is that transparent proxies operate at the HTTP level (Layer 7 of the OSI protocol stack) whereas the present invention operates at the TCP level (Layer 4 of the OSI protocol stack).

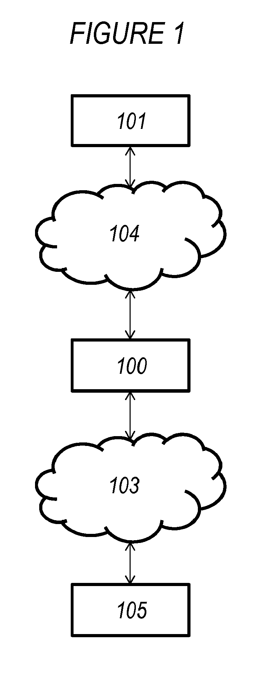

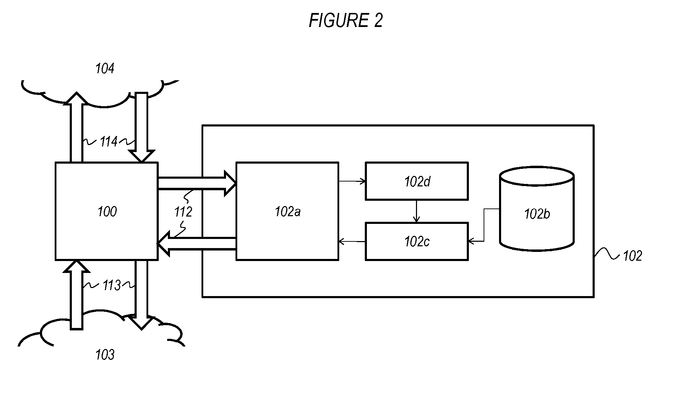

Accordingly, with reference to the exemplary embodiment illustrated in Figure 1 and in more detail in Figure 2, the present invention pertains to an intermediate agent **102** that is able to act on an already established TCP session when the data flowing through the TCP session is matching certain criteria.

The intermediate agent **102** constantly monitors the payload content flowing between a client **105** and a server **101** (in both directions) and acts on it or even modifies it when the payload content fulfills certain criteria.

In an exemplary network topology, a router **100** is located between a provider network **103** comprising a client **105,** and a wide area network **104,** e.g. the Internet, comprising server **101.** The router 100 is configured to deflect all packets of TCP traffic **113-114** that are marked as PUSH to the intermediate agent **102,** also called the "TCP Monitor". The deflected packet stream is indicated as stream **112** in Figure 2.

The router **100** and the intermediate agent **102** are illustrated as separate elements, because of their functionally distinct roles. This does not preclude the implementation of both functions in a common hardware platform. Both the routing function and the TCP Monitor function may for instance be implemented in an access node such as a Digital Subscriber Line Access Multiplexer (DSLAM) or a wireless base station.

It is important to note that all packets of TCP traffic **113-114** that are not marked as PUSH (i.e. SYN, ACK and FIN) are routed to the actual server **101.** That allows the initial TCP session setup, which is mediated by SYN packets, to take place between the client **105** and the server **101** without interference from the intermediate agent **102.**

When the TCP Monitor **102** catches a PUSH packet in the deflected stream **112,** i.e. a packet carrying actual payload of the TCP stream, it monitors/inspects the content of this packet and decides whether it shall act on the corresponding TCP session or not, based on preconfigured criteria.

In the case where the content of the PUSH packet does not match the criteria, the TCP Monitor **102** decides not to act on the corresponding TCP session. It then forwards the unmodified PUSH packet further to the actual server **101** via the router **100.**

In the case where the content of the PUSH packet matches the criteria, the TCP Monitor **102** decides to act on the corresponding TCP session. It then generates a PUSH response.

The generating of the PUSH response may involve the local creation of an adequate response on the basis of information or instructions available at the TCP Monitor **102.** Alternatively or additionally, the generating of the PUSH response may involve actual interaction with the server **101.** This interaction may take the form of forwarding the incoming PUSH packet, optionally after modification at the TCP Monitor **102,** to the actual server **101** via the router **100,** and intercepting the PUSH response that returns from the server **101** to the client **105.** The received PUSH response is relayed to the client **105,** again after optional modification at the TCP Monitor **102.**

The functional blocks involved in the actions that take place at the TCP Monitor **102** are schematically represented in Figure 2. TCP Monitor **102** receives the TCP packets which it is expected to operate on as the stream **112,** arriving from the router **100.** This stream comprises both upstream traffic, i.e. traffic travelling in the direction from the client **105** to the server **101,** and downstream traffic, i.e. traffic travelling in the direction from the server **101** the client **105.** Although these elements are not shown as such in Figure 2, the skilled person will appreciate that the TCP Monitor is equipped with the adequate network interfaces, both at the hardware level and at the software level, to be able to receive and process TCP packets in the data stream **112.** The skilled person will also appreciate that the presence of the router **100** at the illustrated position in the network merely represents an exemplary network topology, and the illustrated topology does not limit the invention in any way.

The TCP Monitor **102** comprises an interception agent **102a** or "EavesDropper", which is used to fetch the packets from the network and inject the response back into the network. The interception agent **102a** is configured to extract useful classification information from the TCP packets.

The TCP Monitor **102** further comprises a logic module **102d** or "DecisionMaker", which determines whether the TCP session will be acted upon or not, on the basis of *inter alia* the classification information extracted by the interception agent **102a.**

The TCP Monitor **102** further comprises a response generator **102c,** which generates the response to be injected in the network by the interception agent **102a,** as described above.

Finally, the TCP Monitor **102** comprises a mapping memory **102b** for keeping track of the mapping between the incoming and outgoing requests.

The interception agent **102a** captures all upstream TCP PUSH packets. Those are uniquely identified by their request 5-tuple, i.e. by the vector consisting of client IP-address, client TCP port, TCP protocol, server IP address, and server TCP port.

The logic module **102d** decodes upstream TCP PUSH packets down to any desired degree of detail, to verify whether certain preconfigured criteria are fulfilled. These criteria can be directed to parameters at the level of the transport protocol itself and/or any of its client layers (i.e., headers and payload pertaining to any layer at or above layer 4 of the OSI model).

If the TCP PUSH packet matches the preconfigured criteria, the TCP Monitor **102** may store the relevant information from that upstream TCP PUSH packet in the memory **102b,** and the response generator **102c** may generate a response according to predetermined rules, as will become clear from the following examples.

The skilled person will appreciate that the aforementioned components **102a-d** of the TCP Monitor **102** may be implemented by any suitable combination of software and one or more hardware components, not excluding wholly dedicated hardware or an implementation in software running on a general-purpose processor.

To illustrate the features and benefits of the invention, and using the same Figures 1-2, we will now consider the use of the TCP Monitor **102** in the context of a BitTorrent exchange. Without loss of generality, a BitTorrent client **105** and a BitTorrent tracker **101** are introduced, which respectively take on the role of the client **105** and the server **101** described in the previous examples. The present example particularly concerns the use of the TCP Monitor **102 to** intervene in the interaction between a random BitTorrent client **105** and a specific BitTorrent tracker **101.**

A BitTorrent client **105** is understood to be any program that implements the BitTorrent protocol. A BitTorrent tracker **101,** as identified in a "torrent file" held by the client **105,** is the computer that coordinates the file distribution. To download the file, the client **105** must first obtain a torrent file for it and connect to the tracker **101** specified therein, which informs the client **105** from which other peers the various pieces making up the desired file can be downloaded.

It may be advantageous for an entity such as an internet service provider (ISP) to intervene in the interaction between the client **105** and the tracker **101,** for instance to direct the client **105** to more suitable sources of the desired file than the peers designated by the tracker **101.** Such redirection gives the ISP additional control over the shape of the traffic within his network, and allows the ISP to limit unnecessary and potentially costly inter-domain traffic.

The BitTorrent client **105** needs to specifically address the BitTorrent tracker **101** and the BitTorrent tracker **101** requires specific information from the BitTorrent client **105** to perform its intended operation.

When the BitTorrent client **105** attempts to set up a TCP connection with the BitTorrent tracker **101,** the router **100** simply relays the initial signaling messages, identified by a SYN flag, between the true end points **105, 101,** without involving the TCP Monitor **102.** Once the TCP connection has been set up, data will be exchanged in TCP packets identified by the PUSH flag.

In particular, the BitTorrent client **105** will request a list of peers participating in the distribution of the desired file from the BitTorrent server **101.** This request, being contained in TCP packets carrying a PUSH flag, will be deflected to the TCP Monitor **102** by the router **100,** before it can reach the BitTorrent server **101.**

At the TCP Monitor **102,** the interception agent **102a** will identify the concerned upstream TCP conversation by means of its unique 5-tuple, i.e. by the vector consisting of client IP-address, client TCP port, TCP protocol, server IP address, and server TCP port. The logic module **102d** will decode the content of the TCP packets to a sufficiently detailed level to recognize the message as constituting the request for the list of designated peers.

At this point, the response generator **102c** may determine a list of the most appropriate peers according to predetermined criteria that relate to the ISP's preferences, and generate a TCP packet comprising that list for transmission to the BitTorrent client **105.** In this scenario, no interaction with the BitTorrent server **101** takes place. In an alternative scenario, the response generator **102c** may allow the BitTorrent client's request to go forward to the BitTorrent server **101,** wait for the server's response to be intercepted - this response is also comprised in a packet identified by a PUSH flag - and modify the response packet to include the ISP-generated list prior to relaying it to the BitTorrent client **105.**

In both cases, the BitTorrent client **105** will be under the impression of having completed a normal request-response exchange with the actual BitTorrent server **101,** and will then proceed with the download of pieces of the desired file from the peers designated by the ISP.

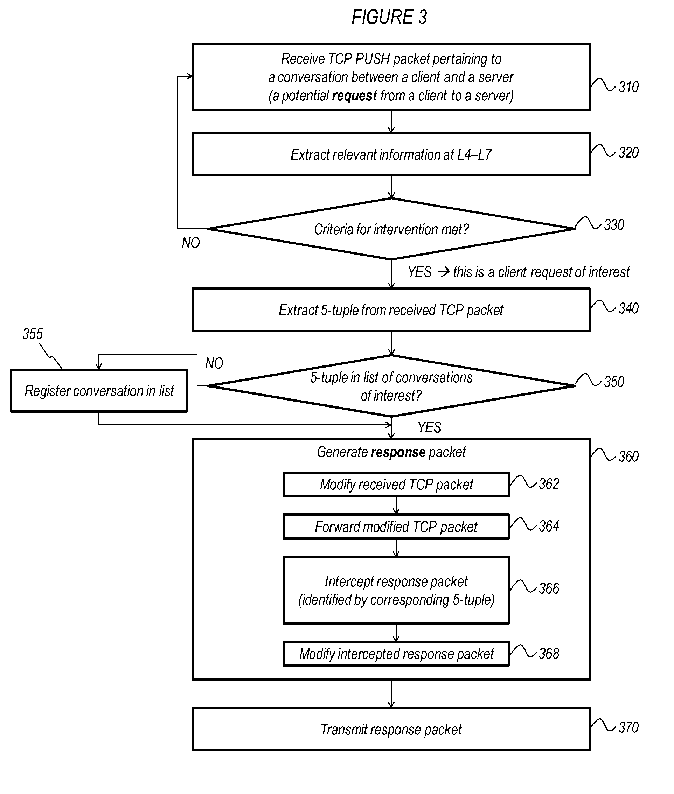

With reference to the flow chart presented in Figure 3, an exemplary method according to the present invention will now be described. For clarity reasons, the description will refer to the exemplary network entities illustrated in Figures 1-2.

In a first step **310,** a TCP PUSH packet pertaining to a conversation between a client **105** and a server **101** is received by the TCP Monitor **102.** Adequate network infrastructure such as the exemplary router **100** should be provided to ensure that these packets are deflected to the TCP Monitor **102.** As this step concerns the interception of packets flowing from the client **105** to the server **101,** any packets corresponding to a "request" from the client in the sense of the higher-layer client-server protocol in question will be observed in this flow.

In a second step **320,** the relevant higher layer information, i.e. information pertaining to layers 4 and up of the OSI protocol stack, is extracted from the received TCP packets.

In a third step **330,** the TCP Monitor **102** verifies on the basis of predetermined criteria with respect to the layer 4+ properties of the packet whether this packet is one for which the TCP Monitor **102** should take some action, i.e. if the packet comprises a request from the client, the response to which must be controlled. If this is not the case, processing may return to the first step **310** to continue with the next incoming TCP packet.

In a fourth step **340,** the unique conversation-identifying 5-tuple is extracted from the received TCP packet by the TCP Monitor **102.**

The received TCP packet can be registered in the mapping memory **102b** in order to be able to find out the Request 5-tuple when the response is received from the server **101** at a later stage (step **366**)**.** To this end, a verification **350** may take place as a fifth step, to check whether the conversation is already known, i.e. registered in the mapping memory **102b.** If this is not the case, the conversation may be registered **355.**

In a sixth step **360,** the TCP Monitor **102** generates a response, i.e. a packet that properly addresses the "request" of the client according to the rules of the higher-layer protocol in question. The response can be generated by following two different methods:
- It may be generated by the "ResponseGenerator" itself without waiting for the further forwarding of the packet. This method does not require further elaboration.
- It may be generated by forwarding the (possibly modified) request to the actual server specified in the request 5-tuple. This method is further illustrated by steps **362-368** in Figure 3: the received TCP packet is optionally modified **362** prior to being forwarded to the intended recipient **364;** the response is intercepted **366,** optionally matched with the appropriate client request according to the stored list of client request 5-tuples, and may also be optionally modified **368.**

When intervening in an existing TCP conversation, the TCP Monitor **102** must ensure the consistency of the sequence numbering of the packets making up the stream. Modification of TCP packets is preferably always carried out in such a way that a single TCP packet is always replaced by a single modified TCP packet. When the content of a TCP packet is changed by the TCP Monitor **102,** the TCP Monitor **102** must provide the modified packet with an updated CRC field, to keep the modified packet from being discarded by the receiver as an alleged "transmission error".

The response should comprise a correctly formed and timed message in view of the protocol(s) running over the TCP conversation. In the earlier example, a client's request for a list of eligible peers would normally be met with a server message comprising such a list; hence, a response from the TCP Monitor **102** comprising such a list would be in order at that time from the point of view of the BitTorrent protocol. The present invention may be used with other higher-layer protocols, including without limitation hyper-text transfer protocol (http), file transfer protocol (ftp), telnet, post office protocol (pop), internet message access protocol (imap), each of which may impose its own requirements upon the timing and/or formation of proper responses, which requirements should be honored by the TCP Monitor **102.**

In a seventh step **370,** the response generated (or modified) by the TCP Monitor **102** in the sixth step **360** is forwarded to the sender **105** of the TCP packet received in the first step **310.** As indicated before, the response generator **102c** may consult the mapping memory **102b** for finding the correct originator of the request.

Although the steps of the method according to the invention have been described hereinbefore and illustrated in Figure 3 as being carried out in a particular order, this is done for clarity reasons only, and should not be considered as limiting the invention. The skilled person will appreciate that the various steps of the method according to the invention may be carried out in a different order, grouped, and/or split, and optional steps may be omitted, without departing from the scope of the present invention.

Features and benefits described in connection with the apparatus according to the present invention also apply *mutatis mutandis* to the methods according to the present invention, and *vice versa.*

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for transparently modifying a TCP conversation between a server and a client, said method comprising the following steps at an intermediate node:
- receiving a first TCP PUSH packet pertaining to said conversation from one of said client and said server;
- extracting information characteristic of layer 4-7 data comprised in said first TCP PUSH packet;
- determining that intervention is desired by applying predetermined criteria to said information;
- generating a response packet; and
- transmitting said response packet to said one of said client and said server;
wherein said response is formed in accordance with requirements of a protocol used in said TCP conversation.

2. The method according to claim 1, wherein said generating of a response packet further comprises:
- transmitting a second TCP PUSH packet to the second one of said client and said server;
- receiving an original response to said second TCP PUSH packet from said second one of said client and said server; and
- using said original response in generating said response packet.

3. The method according to claim 2, wherein said generating of a response packet further comprises:
- modifying said first TCP PUSH packet to generate said second TCP PUSH packet.

4. The method according to claim 2, wherein said generating of a response packet further comprises:
- forwarding said first TCP PUSH packet to the second one of said client and said server as said second TCP PUSH packet.

5. The method according to any of claims 2-4, wherein said generating said response packet comprises modifying said original response and using said modified original response as said response packet.

6. The method according to any of claims 2-4, wherein said generating said response packet comprises using said original response as said response packet.

7. The method of any of the preceding claims, wherein said extracting of said information comprises extracting a 5-tuple identifying said conversation.

8. The method of claim 7, wherein said intermediate node comprises a mapping memory, the method further comprising storing said 5-tuple in said mapping memory, and retrieving said 5-tuple from said mapping memory to determine a recipient of said response packet.

9. The method of claim 7 or claim 8, wherein said extracting of said information further comprises extracting header and/or payload information pertaining to at least one of an OSI layer-5 protocol, an OSI layer-6 protocol, and an OSI layer-7 protocol transported in said received TCP PUSH packet.

10. The method of any of the preceding claims, wherein said conversation carries a BitTorrent protocol exchange, wherein said one of said client and said server is a BitTorrent client and said other one of said client and said server is a BitTorrent tracker, wherein said received TCP PUSH packet comprises a request for a list of peers, and wherein said response packet comprises a list identifying at least one peer designated by said intermediate node.

11. A computer program configured to cause a processor to carry out the method of any of the preceding claims.

12. An apparatus for transparently modifying a TCP conversation, said apparatus comprising:
- an interface for exchanging TCP packets with a network;
- an interception agent, operatively coupled to said interface, for extracting information characteristic of layer 4-7 data comprised in a TCP PUSH packet received from said interface;
- a logic module configured to apply selection criteria to said information; and
- a response generator, configured to generate a response to said TCP PUSH packet if said selection criteria are met and to transmit said response via said interface;
said response generator being adapted to generate said response in accordance with requirements of a protocol used in said TCP conversation.

13. The apparatus of claim 12, further comprising mapping memory operatively coupled to said interception agent and said response generator, for storing a mapping between said TCP PUSH packet and data pertaining to said response.

14. The apparatus of any of claims 12-13, wherein said protocol is a BitTorrent protocol.

15. A network comprising a client, a server, and the apparatus of any of claims 12-14.
